# EUROPEAN PATENT SPECIFICATION

(11) **EP 3 259 043 B1**
(45) Date of publication and mention of the grant of the patent: **12.02.2020**
(21) Application number: 16709821.9
(22) Date of filing: 17.02.2016
(51) Int. Cl.: B01D 35/00, B01D 29/00, B01D 37/04, B01D 29/23, B01D 29/50, B01D 29/52, B01D 29/58, B01D 29/66

(54) **FILTRATION SYSTEM FOR FILTERING LUBRICATING OIL, PARTICULARLY FOR MARINE UNITS SUCH AS MARINE ENGINES**
FILTRIERSYSTEM ZUR FILTERUNG VON SCHMIERÖL, INSBESONDERE FÜR MARITIME EINHEITEN WIE SCHIFFSMOTOREN
SYSTÈME DE FILTRATION POUR FILTRER UNE HUILE LUBRIFIANTE, EN PARTICULIER POUR DES UNITÉS MARINES TELLES QUE DES MOTEURS MARINS

(30) Priority: 18.02.2015 DE 102015102318
(43) Date of publication of application: 27.12.2017
(73) Proprietor: Boll & Kirch Filterbau GmbH, 50170 Kerpen (DE)
(72) Inventor: SCHMITZ, Stefan, 50354 Hürth (DE)
(74) Representative: Althaus, Arndt
(86) International application number: PCT/IB2016/050857
(87) International publication number: WO 2016/132308

(56) References cited:
- EP-A1- 0 656 223
- DE-A1- 3 115 716
- DE-A1- 4 030 084

## Description

The invention relates to a filtration system for filtering lubricating oil, particularly oil for marine power units such as marine engines, having a storage container for lubricating oil, having a main flow filter with a filter housing in a main flow branch for lubricating oil between the storage container and the marine unit, and having a bypass flow filter with a filter housing in a bypass flow branch for lubricating oil, which opens into the storage container, wherein the filter housing of the main flow filter and the filter housing of the bypass flow filter each have an inlet, an outlet and an installation space for an exchangeable filter insert, said space being arranged in the flow pass between the inlet and the outlet. The invention also relates to a method for controlling a filtration system for filtering lubricating oil, particularly that for marine units such as marine engines, wherein the ship is provided with a storage container for lubricating oil, with a main flow filter with a filter housing in a main flow branch for lubricating oil between the storage container and the marine unit, and with a bypass flow filter with a filter housing in a bypass flow branch for lubricating oil, which opens into the storage container, and the filter housing of the main flow filter and the filter housing of the bypass flow filter each have an inlet, an outlet and an installation space for an exchangeable filter insert, said space being arranged in the flow between the inlet and the outlet.

Filtration systems on ships are used to protect the marine unit connected to the filtration system. On ships, filtration systems for lubricating oil are used especially in the lubricating oil circuit of the marine engines, such as, in particular, large diesel engines, used to drive ships. There are numerous requirements on the filtration system in this context since large volume flows have to be filtered, and even major contamination of the lubricating oil must be reliably eliminated, and, at the same time, trouble-free operation of the filtration system over long periods of time is required, even under extreme and extremely variable temperatures and pressures, since ships may be underway for days or weeks without the possibility of maintenance in a port. Manufacturers of marine engines therefore define purity levels which must be maintained by a filtration system of this kind, failing which it is not possible to achieve certification and licensing of the filtration system for engines from this manufacturer.

The filtration systems used hitherto on ships employ a plurality of fluid flow branches, wherein an automatic filter that can be back-flushed is used in the main flow branch, to which the marine engine is connected, said filter generally being fitted with filter candles to obtain a large filter surface area. By means of a back-flushing device, these filter candles can be automatically back-flushed, either individually or in groups, while all the other filter candles are available for filtering operation. Purely by way of example, attention is drawn to WO 01/89658 A1 or EP 0 656 223 A1, in which the fundamental construction of corresponding automatic filters is shown and explained. A known practice in this context is to process the flushing oil in the back-flushing line with ultrafilters or centrifuges.

A bypass flow branch or a plurality of bypass flow branches can be provided in parallel with the main flow branch. In some filtration systems, bypass flow filters are used in this bypass flow branch, filtering the liquid in the reservoir independently of the main flow filter in order to minimize the degree of contamination of the lubricating oil; the bypass flow filter then often has fine filter cartridges, through which the lubricating oil flows extremely slowly so as to filter out even microfine dirt particles. A brief outage of the bypass flow branch is then unproblematic. It is also possible to use separators, desorbers and other units in further bypass flow branches in order to cut out particles and water and ensure the purity level of the lubricating oil.

JP 2003/120794 discloses a filtration system in which a main circuit having a main flow filter and a bypass circuit having a bypass flow filter are present, it being possible to control these by means of switching devices in such a way that the supply of filtered lubricant to an engine or to some other consuming unit can take place via the main flow filter or the bypass flow filter. By means of the switching devices, the bypass branch can be switched in such a way that the bypass flow filter in the bypass flow branch can process a back-flush fluid from the main flow filter before the back-flush fluid is fed back into the reservoir. Relatively complex and expensive switching devices are required upstream and downstream of the main flow filter and the bypass flow filter in order to ensure the supply of lubricant via either the main flow filter or the bypass flow filter.

It is the object of the invention to provide a filtration system which, while being of relatively simple construction, meets the requirements on filtration systems for ships, especially as regards a high purity level and cleaning efficiency of the lubricant, and avoids the disadvantages of the prior art. At the same time, the intention is to create a method by means of which a filtration system of this kind can be employed to advantage in the start-up phase of a marine engine, i.e. in the initial hours of operation of the engine.

To achieve this object, the proposal of the invention, as regards the filtration system, is that the installation space of the main flow filter can be fitted or is fitted either with a back-flushable automatic filter insert or instead with a non back-flushable simple filter insert, that the filter housing of the main flow filter has a back-flush outlet for back-flush fluid of a back-flushing device and that the inlet of the bypass flow filter is connected to the back-flush outlet. In the solution according to the invention, it is very largely possible to dispense with switching devices since, in principle, only the filter insert is exchanged and therefore the supply of lubricant to the engine takes place always and exclusively via the main flow filter, although the latter may achieve different purity levels due to the respectively selected filter insert. Since, when using an automatic filter insert in the main flow filter, the back-flush fluid is fed to the side flow filter according to a detailed aspect of the solution according to the invention, a situation is avoided where the contaminants separated from the filtering surface of the automatic filter insert in the back-flushing mode can re-enter the lubricant circuit. It is of particular advantage that filtering of the lubricant can be performed by means of the simple filter insert especially in the start-up phase, i.e. the initial hours of operation, in which there is an increased incidence particularly of contaminants comprising solids in the lubricant because the individual components of the marine engine have not previously been in operation, said simple filter insert generally ensuring better filter fineness than the automatic filter insert. At the same time, the simple filter insert is generally considerably less expensive, for which reason exchanging the simple filter insert weighs less heavily on operating costs than premature exchange of an automatic filter insert.

As regards the method, the proposal according to the invention is that, during the first X hours of operation of the unit arranged downstream of the filtration system, the installation space of the main flow filter is fitted with a simple filter insert that cannot be back-flushed and the bypass branch connected to a back-flush outlet on the filter housing of the main flow filter is closed and, after the expiry of the X hours of operation, the main flow filter is fitted with an automatic filter insert being back-flushable and the back-flush fluid is fed to the bypass flow filter arranged in the bypass branch via the back-flush outlet, said bypass flow filter being fitted with a simple filter insert not being back-flushable in order to filter the back-flush fluid. The start-up phase of an engine can be approximately X = 200 hours of operation, for example. It is obvious that the number of hours of operation can vary, depending on the engine, engine manufacturer, requirements on the purity level and the degree of contamination.

In the particularly preferred embodiment of the filtration system, the automatic filter insert has at least one overflow valve with a filter stage arranged downstream of the overflow valve. The downstream filter stage ensures that, even when the filtering surface that can be back-flushed in the automatic filter insert no longer allows a sufficient inflow of filtered lubricant owing to excessive contamination, for example, an adequate supply of filtered lubricant to the engine continues to be maintained because the fluid (lubricant) flowing unfiltered through the overflow valve is filtered in the downstream filter stage before it is fed to the marine engine or to some other unit requiring lubrication.

It is furthermore particularly advantageous if the overflow valve and the filter stage arranged downstream of the latter are integrated into the automatic filter insert since it is then unnecessary to convert the main flow filter: instead, all the components are retrofitted with the replacement of the simple filter insert by an automatic filter insert.

In order to make conversion particularly simple, it is furthermore advantageous if the main flow filter is provided with a turbine drive installed in the housing of the main flow filter or with a motor drive flanged to the housing, which can be coupled or, when the automatic filter insert is installed, is coupled to a back-flushing device integrated into the exchangeable automatic filter insert.

A preferably switchable shut-off member can be arranged in the bypass flow branch between the back-flush outlet and the inlet of the bypass flow filter. In the preferred embodiment, however, no shut-off member is employed; instead, the simple filter insert is provided with a closure member for the back-flush outlet. As an alternative, it is, of course, also possible for the back-flush outlet to be closed with a closure as long as a simple filter insert is employed in the main flow filter. It is particularly preferred if the inlet of the bypass flow filter is fluidically connected exclusively to the back-flush outlet on the main flow filter.

The filter housing of the bypass flow filter preferably has no back-flush outlet or has only a permanently closed back-flush outlet. The installation space of the bypass flow filter is preferably designed in such a way that either the automatic filter insert being insertable into the main flow filter or the simple filter insert being insertable into the main flow filter can be inserted into this installation space. It is particularly advantageous if the filter housing for the bypass flow filter and the main flow filter are of the same basic construction, being manufactured from the same casting, for example, wherein the finish-machining of the casting required for the automatic mode (back-flushing mode) is performed only on the filter housing of the main flow filter.

The filter stage arranged downstream of the overflow valve/s can preferably be embodied as a protective screen, in particular as a cylindrical protective screen, and can be arranged between the inlet and the outlet of the main flow filter. According to a particularly advantageous embodiment, the automatic filter insert can be fitted with filter candles, which are preferably arranged between screening plates, to each of which is assigned a back-flushing member, which is coupled to a central hollow shaft passing through the automatic filter insert, the cavity of which opens into the back-flush outlet for back-flush fluid in the installed state of the automatic filter insert in the main flow filter. The individual filter candles can be back-flushed from one side or from both sides. The filter candles can be arranged in one or more pitch circles around the hollow shaft, as is known per se for automatic filter inserts. However, the automatic filter insert can also have a different construction with screen inserts or screening discs or the like that can be back-flushed, for example. The design of the simple filter insert can also differ, depending on the use. In particular, it can be a cartridge filter, a cylindrical filter with smooth or pleated filtering means, a filter insert with a multiplicity of filter candles, the filter material of which is smooth or, for example, pleated in order to further increase the filter surface area, or a filter insert with filtering surfaces of disc-shaped construction. The filter fineness of the filter material of the automatic filter insert is preferably in a range of about 5 µm to 25 µm, and the filter fineness of the filter material of the simple filter insert is preferably in a range of about 1 µm to 20 µm. However, the filter fineness can also take other values.

As is known per se, at least one prefilter can be arranged upstream of the main flow filter, and/or at least one pump is provided in the lubricant circuit.

Further advantages and embodiments will become apparent from the following description of an illustrative embodiment shown schematically in the drawing. The illustrative embodiment shows an advantageous embodiment without restricting the scope of protection thereto. In the drawing:
- **Fig. 1**: shows the filtration system according to the invention schematically, in greatly simplified form, in a hydraulic circuit diagram in the normal mode;
- **Fig. 2**: shows the filtration system schematically, in greatly simplified form, in a hydraulic circuit diagram in the start-up phase of an engine;
- **Fig. 3**: shows schematically the swapping of the filter inserts between the main flow filter and the bypass flow filter in a preferred configuration;
- **Fig. 4**: shows an advantageous configuration according to the invention of the main flow filter and the bypass flow filter and the equipment thereof with filter inserts in the normal mode, in a sectional view;
- **Fig. 5**: shows the equipment of the same main flow filter and bypass flow filter in the start-up phase; and
- **Figs 6A-6C**: show schematically various variant embodiments of the simple filter insert.

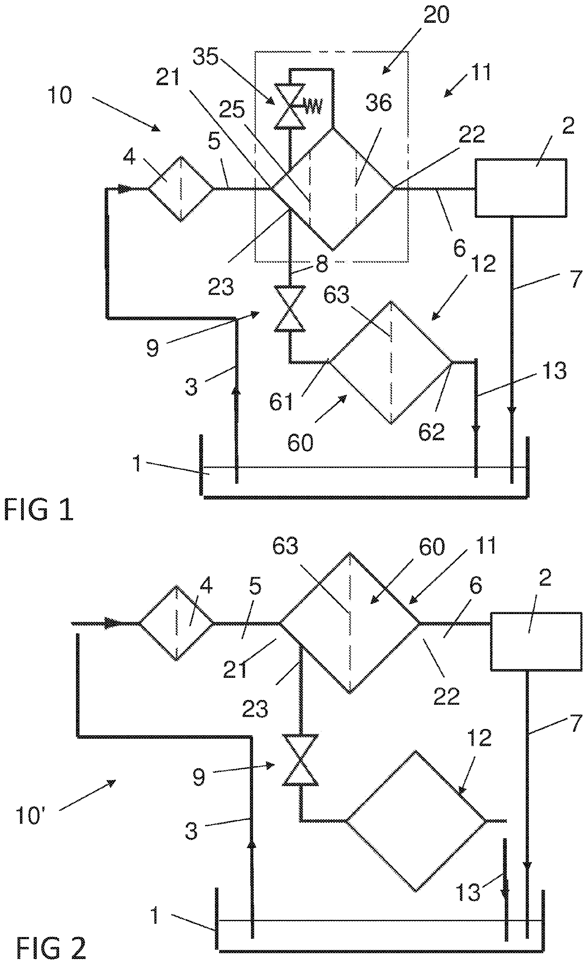

In the hydraulic circuit diagram according to Figure 1, an advantageous embodiment of a filtration system 10 according to the invention is shown schematically in greatly simplified form. Reference sign 1 denotes a storage container for lubricating oil, e.g. a lubricating oil tank, from which lubricating oil is continuously withdrawn via the withdrawal line 3 in a closed lubricating oil circuit during the operation of a marine engine denoted overall by reference sign 2. Normally, a suitable pump is arranged in the withdrawal line 3, although, neither the pump nor a shut-off valve which may be provided in the withdrawal line 3, are shown for the sake of simplicity. In the illustrative embodiment shown, the lubricant withdrawn from the storage container 1 via the withdrawal line 3 is fed first to a prefilter 4, which is, for example, a cartridge filter or a mesh filter having a filter fineness of about 34 µm, for example. It would also be possible for a plurality of prefilters to be provided, or the prefilter could even be omitted. The fluid (lubricant) appropriately prefiltered here in the prefilter 4 is fed via the intermediate line 5 to an inlet 21 on a main flow filter denoted overall by reference sign 11, wherein the main flow filter 11, as will be explained below, is provided with a filter housing, into which an automatic filter insert 20 with a filtering surface 25 that can be back-flushed is inserted. In Figure 1, the filtering surface that is back-flushable is denoted by reference sign 25 and has a filter fineness of 10 µm, for example. The lubricant filtered by means of the filtering surface 25 being back-flushable then passes out of the filter housing of the main flow filter 11 via an outlet 22 and is fed to the marine engine 2 as filtered lubricant via the feed line 6 and subsequently fed back into the storage container 1 via the return line 7.

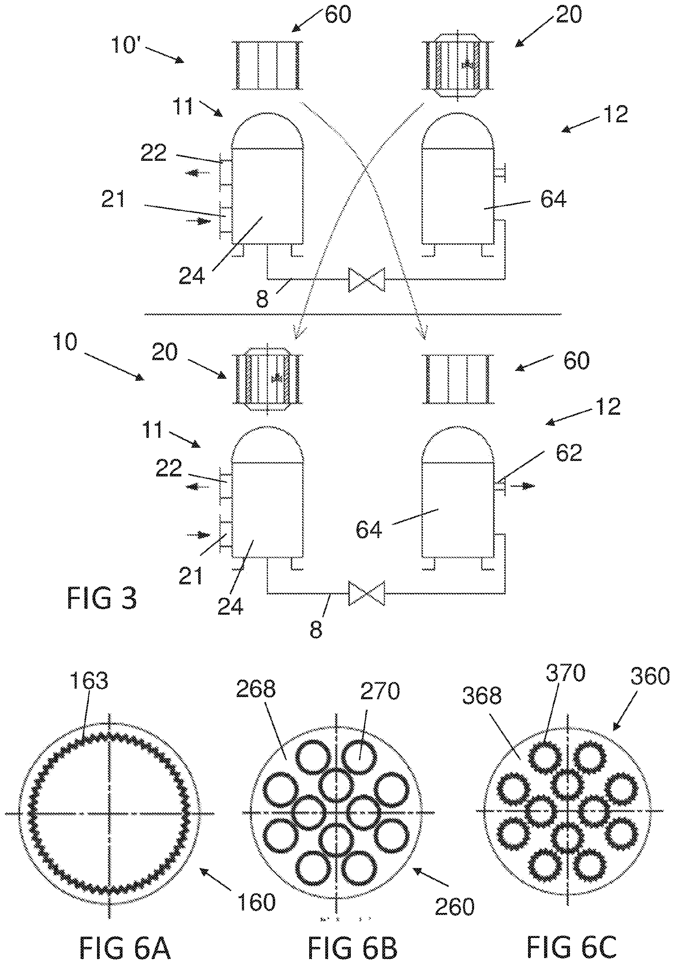

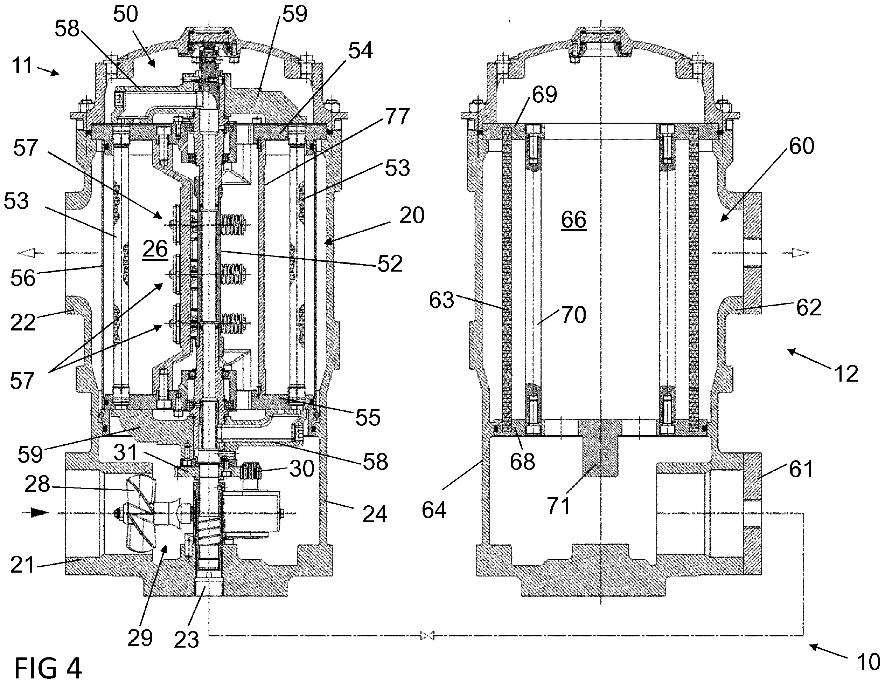

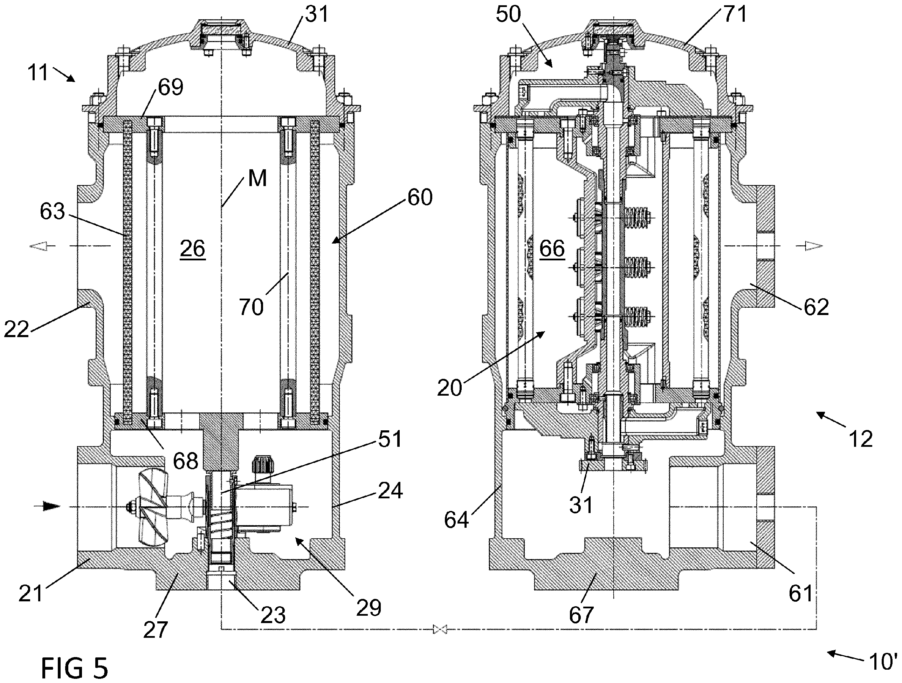

For back-flushing the filtering surface 25, the automatic filter insert 20 of the main flow filter 11 is provided with a back-flushing device (not shown in Figure 1), the construction and operation of which will be explained below with reference to Figures 4 and 5. The back-flush fluid contaminated during back-flushing with the residues previously filtered out, during which back-flushing process the flow through the filtering surface 25 is counter to the actual filtering direction, is passed out of the housing of the main flow filter 11 via a back-flush outlet 23 and fed to the inlet 61 of a bypass flow filter 12 via a line branch 8, to which a shut-off member 9, such as a shut-off valve, is assigned as an additional safeguard in the illustrative embodiment shown. As will be explained with reference to Figures 3 to 5, a simple filter insert, which is denoted overall by reference sign 60 in Figure 1, is inserted into the filter housing of the bypass flow filter 12. This simple filter insert, which cannot be back-flushed, could, for example, be a cartridge filter with a filtering surface 63, the filter fineness of which is considerably finer than the filtering surface of the automatic filter insert 20. When an automatic filter insert 20 is employed in the main flow filter 11 and, accordingly, there is regular back-flushing and automatic cleaning of the filtering surface 25, the bypass flow filter 12 is used to filter the back-flush fluid which arises during back-flushing before it emerges from the outlet 62 of the filter housing of the bypass flow filter 12 and flows into the storage container 1 via line 13.

The main flow filter 11 or automatic filter insert 20 is furthermore provided with an overflow valve 35, wherein, downstream of this overflow valve 35, there is a second filter stage, which is indicated by reference sign 36 in Figure 1 and is intended in all cases to ensure the minimum filter fineness demanded by the engine manufacturer for the operation of the engine. If the overflow valve 35 opens because of overloading or malfunctioning of the filtering surface 25 in the main flow filter 11, a supply of lubricant to the marine engine 2 in the form of filtered fluid, which first of all uses the overflow valve as a bypass for the actual filtering surface 25 in the automatic filter insert 20 and is then filtered by means of the filtering surface 36 of the second filter stage, would consequently continue to be maintained via the feed line 6 without the need to provide a bypass flow branch (side flow branch) for this purpose. The main flow filter 11 together with the feed lines 5 and 6 consequently ensures the supply of lubricant to the marine engine 2 at all times in the filtration system 10 according to the invention. The bypass flow branch is formed by lines 8, 13 and the bypass flow filter 12, via which, however, there is no supply to the marine engine 2 in the illustrative embodiment shown.

Figure 2 shows the use of the same filtration system 10' during the start-up phase of a marine engine 2, e.g. during the first 300 hours of operation of said engine. Insofar as the individual components of the filtration system 10' are of identical construction as in the normal mode shown in Figure 1, the same reference signs are used in Figure 2. Once again, the lubricating oil is preferably drawn in from the storage container 1 via the withdrawal line 3 by means of a pump (not shown), and prefiltering takes place in a prefilter 4, from which the lubricant is fed to the inlet 21 of the main flow filter 11 via the intermediate line 5. However, the filter housing of the main flow filter 11 is not equipped with an automatic filter insert being back-flushable, but instead with a non back-flushable simple filter insert 60, i.e. an insert which is not being back-flushable, which simple filter insert 60 in the normal mode, as explained with reference to Figure 1, is inserted into the bypass flow filter 12 for processing the back-flush fluid in the said normal mode. In the start-up phase, the filtering of the lubricating oil in the flow pass between the inlet 21 and the outlet 22 of the main flow filter 11 takes place via the filtering surface 63 of the simple filter insert 60 before the correspondingly filtered lubricating oil is fed to the marine engine 2 via feed line 6 and is then fed back into the storage container 1 via the return line 7. The entire bypass flow branch, consisting of line 8, bypass flow filter 12 and line 13, is shut off for as long as a simple filter insert 60 is inserted into the main flow filter 11. Shut-off can be accomplished by means of the shut-off valve 9 but preferably takes place directly in the filter housing of the main flow filter 11, in particular by means of a suitable shut-off member directly on the filter insert 60, as will be explained below. Since the bypass flow filter 12 is out of operation during this phase and is also not supplied with a fluid flow, it can be used in the start-up phase to temporarily store the automatic filter insert, which is then inserted later into the housing of the main flow filter 11. However, as an alternative, the arrangement could also be such that the bypass flow filter 12 is fitted with a simple filter insert during the start-up phase and the inlet of the bypass flow filter is connected to the storage container by means of a changeover device in order to use the bypass flow filter 12 to process the lubricating oil in the storage container 1 in the start-up phase. One of the simple filter inserts used in the start-up phase could then be disposed of on completion of the start-up phase.

Figure 3 once again illustrates, in a schematic representation, the different use of the main flow filter 11 and of the bypass flow filter 12 in a filtration system 10' in the start-up phase, as illustrated in the upper half of Figure 3, and in the normal mode, as indicated in the lower half by filtration system 10. In the start-up phase, a simple filter insert 60 is inserted into the filter housing 24 of the main flow filter 11 in filtration system 10', while the filter housing 64 of the bypass flow filter 12 serves exclusively as a temporary storage location for an automatic filter insert 20. On completion of the start-up phase, all that is required is to swap the two filter inserts 20, 60, and the automatic filter insert 20 is installed in the filter housing 24 of the main flow filter 11 and filter insert 60 is inserted into the filter housing 64 of the bypass flow filter. In the start-up phase using filtration system 10', lubricating oil is fed to the inlet 21 and emerges after being filtered from the outlet 22. There is no fluid flow via the line branch 8 leading to the bypass flow filter 12. In the normal mode using filtration system 10, there continues to be filtering of the lubricating oil in the main flow filter 11, but this is accomplished by means of filter candles that can be back-flushed, for example, in the automatic filter insert 20. Only in this operating phase is the line branch 8 open, and processing of the back-flush fluid takes place by means of a simple filter insert 60 within the bypass flow filter 12, as indicated by the arrow at the outlet 62 of the filter housing 64 of the bypass flow filter 12.

A particularly preferred illustrative embodiment of the construction of the bypass flow filter 12 and the main flow filter 11 and of filter inserts 20 and 60 used with said filters is shown in Figures 4 and 5, wherein Figure 4 shows the fitting of the filter housings 24, 64 in filtration system 10 in the normal mode and Figure 5 shows the fitting of the same filter housings 24, 64 in the start-up phase in filtration system 10'. It is clearly apparent from Figures 4 and 5 that the main flow filter 11 and the bypass flow filter 12 each have a filter housing 24 in the main flow filter 11 and a filter housing 64 in the bypass flow filter 12 which are of identical construction; each of the two housings 24, 64 has an installation space 26, 66 in the interior, into which either an automatic filter insert 20 or a simple filter insert 60 is inserted. In a base region, the filter housings 24, 64 have an inlet 21, 61 formed by a connection stub and, at the level of the installation region 26, 66, they have a radial filter outlet 22, 62. Only the base 27 of the filter housing 24 of the main flow filter 11 is provided with a back-flush outlet 23 for back-flush fluid, said outlet being provided centrally on the centre line M of the filter, while the base region 67 of the filter housing 64 of the bypass flow filter 12 does not have a corresponding hole. A turbine 28 of a turbine drive denoted overall by reference sign 29 is furthermore installed in the base 27, downstream of the inlet 21, exclusively in the main flow filter 11, the output gearwheel 30 of which drive rotates continuously during fluid flow, although, in the filtration system 10' shown in Figure 5, in which a simple filter insert 60 is inserted into the main flow filter 11, no elements of the simple filter insert 60 are in mesh with the output gearwheel 30. The automatic filter insert 20, on the other hand, has an input gearwheel 31 for a back-flushing device 50 denoted overall by 50, which is installed in a fixed manner with the automatic filter insert 20. When the automatic filter insert 20 is inserted into the housing 24, as shown in Figure 4, the output gearwheel 30 of the turbine drive 29 and the input gearwheel 31 of the back-flushing device 50 intermesh in order to rotate the latter continuously.

In the embodiment shown in Figures 4 and 5, the simple filter insert 60 is embodied as a cartridge filter with a cylindrical filter wall 63, which is held between two annular discs 68, 69 clamped together by means of screws 70. The fluid to be filtered flows via the lower annular disc 68 into the interior of the simple filter insert 60 and must pass via the filter wall 63, which forms the filtering means 63 of the simple filter insert, in order to be able to flow out via the outlet 62. The lower annular disc 68 is provided centrally with a plug 71, which projects beyond the underside of said annular disc 68 and, in the normal mode according to filtration system 10, i.e. when the simple filter insert 60 is inserted into the housing of the bypass flow filter 12, has no function but, in the start-up phase according to filtration system 10', when the simple filter insert 60 is inserted into the housing 24 of the main flow filter 11, serves to sealingly shut off a passage 51 that passes centrally through the turbine drive 29 and opens into the back-flush outlet 23.

Conversion of the main flow filter 11 by removing the simple filter insert 60 and inserting an automatic filter insert 20 is accomplished via the removable cover 31 on the filter housing 24 of the main flow filter 11. The filter housing 64 of the bypass flow filter 12 also has a cover 71, which is in principle of identical construction. If, as shown in the left-hand half of Figure 4, the automatic filter insert 20 is inserted into the filter housing 24 of the main flow filter 11, the back-flushing device 50 installed with the filter insert 20 comes into effect. This back-flushing device 50 has a hollow shaft 52, which passes centrally through the automatic filter insert 20 and is connected for conjoint rotation to the input gearwheel 31. A multiplicity of filter candles 53, through which there is a flow from the inside outwards in the filtering mode and through which there is a flow from the outside inwards only in the back-flushing mode, is arranged in the automatic filter insert 20, in this case on two pitch circles. In the filtering mode, the lubricant to be filtered can enter the interior of the filter candles 53 via both ends. Owing to the section selected, Fig. 4 shows only filter candles which are in the back-flushing mode. The filter candles 53 are clamped between two screening plates 54, 55, and lubricating oil to be filtered coming from the inlet 21 of the filter housing 24 of the main flow filter 11 can either enter at the bottom into one of the ends of the filter candles 53 or pass through the filter insert 20 via a central passage enclosed by means of a tube section 77 and then enter the upper ends of the filter candles 53 operating in the filtering mode from the direction of the cover. Arranged around all the filter candles 53, between the screening plates 54, 55, there is furthermore a protective screen 56, through which the lubricant (filtrate) previously cleaned by means of the filter candles 53 must also pass before it emerges from the main flow filter 11 via the outlet 22 and is fed to the consuming unit, in the illustrative embodiment shown the marine engine (2, Figure 1) .

Here, there is a plurality of spring-loaded overflow valves 57 on the tube section 75, said valves opening and forming a bypass relative to the filter candles 53 if the differential pressure between the inlet 21 and the outlet 22 in the main flow filter 11 exceeds a value preset by means of the spring of the overflow valve. This can be indicated in parallel by means of a differential pressure indicator (not shown) and output as a fault alarm. However, since the protective screen 56 is arranged downstream of the overflow valves 57, only filtered lubricant, namely lubricant filtered by means of the protective screen 56, would be fed to the downstream unit in such a case.

The back-flushing device 50 operates continuously and cleans the filter candles 53 alternately; for this purpose, both the upper screening plate 54 and the lower screening plate 55 are assigned a back-flushing member 58. To improve the back-flushing effect, a closing member 59 furthermore also co-rotates with the hollow shaft 52 and sweeps the screening plate in each case with an angular offset of 180 degrees with respect to the back-flushing member. Both the back-flushing members 58 and the closing members 59 are connected for conjoint rotation to the hollow shaft 52 and are in each case arranged in such a way that a closing member 59 closes one end of a filter candle 53 operating in the back-flushing mode when the back-flushing member 58 connects the opposite end of the filter candle fluidically to the cavity in the hollow shaft 52 and hence to the back-flush outlet 23. Back-flushing is accomplished by exploiting the pressure gradient between the pressure of the lubricating oil in the main flow filter and the pressure in the bypass flow branch connected to the back-flush outlet 23. When the automatic filter insert 60 is inserted into the housing 24 of the main flow filter 11, gearwheels 30, 31 are automatically coupled, and the cavity of the hollow shaft 52 is also connected to the central passage 51 within the turbine drive and thereby connected to the back-flush outlet 23.

According to a partial aspect of the invention, the back-flush fluid does not flow unfiltered into the storage container from the back-flush outlet 23 but, in the normal mode according to filtration system 10, flows first of all into the inlet 61 of the bypass flow filter 12 before then being cleaned by means of the filter insert 60 and, having been appropriately filtered, being fed to the storage container (1, Figure 1).

In the illustrative embodiment shown in Figures 4 and 5, the filter insert 60 is provided with a cylindrical filter wall. Figure 6A shows, in a schematic, highly simplified horizontal section, a simple filter insert 160, in which the filter wall 163 is of cylindrical design but consists of a pleated, folded filter paper or the like. However, the simple filter insert could also be formed by filter candles, as shown by way of example for the simple filter insert 260 and Figure 6B and the simple filter insert 360 in Figure 6C. In the illustrative embodiment 6B, the simple filter insert 260 has a multiplicity of filter candles 270, which are clamped between a lower and an upper screening plate 268 and through the circumferential wall of which, which forms the filtering means, the fluid passes for filtration. In the illustrative embodiment of the simple filter insert 260, the individual candles 270 have a smooth filter wall. In the illustrative embodiment of the filter insert 360, as in the illustrative embodiment according to Figure 6B, a multiplicity of filter candles 370 is arranged between two screening plates 268, but each individual filter candle 370 has a filter wall consisting of pleated paper or the like folded in a star pattern. Primarily in the start-up phase of a new marine engine, the filtration system is operated in the manner illustrated in Fig. 5. In this start-up phase, the installation space 66 of the main flow filter 11 is fitted with the simple filter insert 60 that cannot be back-flushed, which seals the open end of the passage 51 on the turbine drive 29 by means of the plug 71. The bypass branch connected to the back-flush outlet 23 on the filter housing 24 of the main flow filter is thereby closed. There is no fluid flow in the bypass flow filter. On expiry of at least 300 hours of operation, for example, the main flow filter 11 is then fitted for the first time with the automatic filter insert 20, which can be back-flushed, and the back-flush fluid is fed continuously via the back-flush outlet 23 to the bypass flow filter 12, which is arranged in the bypass branch and is now fitted with a simple filter insert 60. Initially, this can even be the simple filter insert 60 which was used in the main flow filter 11 in the start-up phase.

For a person skilled in the art, the above description will suggest numerous modifications, and these should fall within the scope of protection of the attached claims. The use of a main flow filter and of a bypass flow filter with filter housings that are substantially identical in construction and allow temporary storage of an automatic filter insert in the filter housing of the bypass flow filter forms just one preferred embodiment. The filter housings could also be of different construction, and the automatic filter insert would then have to be stored separately. Particularly in the start-up phase, the bypass flow filter can also be used for additional cleaning of the lubricant in the storage container, for which purpose only a relatively simple switching device would have to be provided in the feed line of the bypass flow filter. The design principle of the automatic filter insert can also be different. In particular, the filtration system can also be used to filter fuel or lubricant in the injection system of power station motors, for example. The simple filter inserts or the filter elements thereof, insofar as they are exchangeable, can be replaced by new simple filter inserts or elements when a predetermined final differential pressure is reached, for example.

## Claims

1. Filtration system for filtering lubricating oil, particularly oil for marine units such as marine engines, having a storage container (1) for lubricating oil, having a main flow filter (11) with a filter housing (24) in a main flow branch for lubricating oil between the storage container and the marine unit, and having a bypass flow filter (12) with a filter housing (64) in a bypass flow branch for lubricating oil, which opens into the storage container (1), wherein the filter housing (24) of the main flow filter and the filter housing (64) of the bypass flow filter each have an inlet (21; 61), an outlet (22; 62) and an installation space (26; 66) for an exchangeable filter insert, said space being arranged in the flow between the inlet and the outlet, **characterized in that** the installation space (26) of the main flow filter (11) can be fitted either with a back-flushable automatic filter insert (20) or a non-back-flushable simple filter insert (60), or is fitted either with a back-flushable automatic filter insert (20) or a non-back-flushable simple filter insert (60), **in that** the filter housing (24) of the main flow filter (11) has a back-flush outlet (23) for back-flush fluid of a back-flushing device and **in that** the inlet (61) of the bypass flow filter is connected to the back-flush outlet (23).

2. Filtration system according to Claim 1, **characterized in that** the automatic filter insert (20) has at least one overflow valve (35) with a filter stage (36) arranged downstream of the overflow valve.

3. Filtration system according to Claim 2, **characterized in that** the overflow valve (35; 57) and the filter stage (36) arranged downstream of the latter are integrated into the automatic filter insert (20).

4. Filtration system according to one of Claims 1 to 4, **characterized in that** the main flow filter (11) is provided with a turbine drive (29) installed in the housing or with a motor drive flanged to the housing, which is coupable or, when the automatic filter insert is installed, is coupled to a back-flushing device (50) integrated into the exchangeable automatic filter insert (20).

5. Filtration system according to one of Claims 1 to 5, **characterized in that** a preferably switchable shut-off member (9) is arranged in the bypass flow branch between the back-flush outlet (23) and the inlet (61) of the bypass flow filter.

6. Filtration system according to one of Claims 1 to 6, **characterized in that** the simple filter insert (60) is provided with a closure member (71) for the back-flush outlet (23).

7. Filtration system according to one of Claims 1 to 7, **characterized in that** the filter housing (64) of the bypass flow filter has no back-flush outlet or has a permanently closed back-flush outlet.

8. Filtration system according to one of Claims 1 to 8, **characterized in that** the installation space (66) of the bypass flow filter is designed to receive either the automatic filter insert (20) being insertable into the main flow filter or the simple filter insert (60) being insertable into the main flow filter.

9. Filtration system according to one of Claims 1 to 9, **characterized in that** the filter stage arranged downstream of the overflow valve/s (35; 57) is embodied as a protective screen (56), in particular as a cylindrical protective screen, wherein the protective screen (56) is preferably arranged as a component of the automatic filter insert between the inlet (21) and the outlet (22) of the main flow filter.

10. Filtration system according to one of Claims 1 to 9, **characterized in that** the automatic filter insert (20) is fitted with filter candles (53), which are preferably arranged between screening plates (54, 55), to each of which is assigned a back-flushing member (58), which is coupled to a central hollow shaft (52) passing through the automatic filter insert, the cavity of which opens into the back-flush outlet (23) for back-flush fluid in the installed state of the automatic filter insert in the main flow filter.

11. Filtration system according to one of Claims 1 to 10, **characterized in that** at least one prefilter (4) is arranged upstream of the main flow filter.

12. Filtration system according to one of Claims 1 to 11, **characterized in that** the filter fineness of the filter material of the automatic filter insert is in a range of about 5 µm to 25 µm, and the filter fineness of the filter material of the simple filter insert is in a range of about 1 µm to 20 µm.

13. Method for controlling a filtration system for filtering lubricating oil, particularly oil for marine power units such as marine engines, wherein the ship is provided with a storage container for lubricating oil, with a main flow filter (11) with a filter housing (24) in a main flow branch for lubricating oil between the storage container and the marine unit, and with a bypass flow filter (12) with a filter housing (64) in a bypass flow branch for lubricating oil, which opens into the storage container, and the filter housing of the main flow filter and the filter housing of the bypass flow filter each have an inlet, an outlet and an installation space for an exchangeable filter insert, said space being arranged in the flow between the inlet and the outlet, **characterized in that,** during the start-up phase of operation of the unit arranged downstream of the filtration system, the installation space (26) of the main flow filter (11) is equipped with a non back-flushable simple filter insert (60) while the bypass branch connected to a back-flush outlet (23) on the filter housing (24) of the main flow filter (11) is closed and, after the expiry of the start-up phase of operation, the main flow filter is equipped with a back-flushable automatic filter insert (20) and the back-flush fluid is fed to the bypass flow filter (12) arranged in the bypass branch via the back-flush outlet, said bypass flow filter being fitted with a non back-flushable simple filter insert (60) in order to filter the back-flush fluid.

14. Method according to Claim 13, **characterized in that** the filtration system is designed in accordance with one of Claims 1 to 12.

15. Method according to Claim 13 or 14, **characterized in that** the simple filter insert used in the bypass flow filter is the one used in the main flow filter during the start-up phase of operation, wherein preferably the start-up phase takes a duration of up to 300 hours.

## Patentansprüche

1. Filtrationssystem für die Schmierölfiltration insbesondere von Schiffsaggregaten wie Schiffsmotoren, mit einem Vorratsbehälter (1) für Schmieröl, mit einem Hauptstromfilter (11) mit Filtergehäuse (24) in einem Hauptstromzweig für Schmieröl zwischen Vorratsbehälter und Schiffsaggregat, und mit einem Nebenstromfilter (12) mit Filtergehäuse (64) in einem in den Vorratsbehälter (1) mündenden Nebenstromkreis für Schmieröl, wobei das Filtergehäuse (24) des Hauptstromfilters und das Filtergehäuse (64) des Nebenstromfilters jeweils einen Einlass (21; 61), einen Auslass (22; 62) und einen strömungstechnisch zwischen diesen angeordneten Aufnahmeraum (26; 66) für einen auswechselbaren Filtereinsatz aufweisen, **dadurch gekennzeichnet, dass** der Aufnahmeraum (26) des Hauptstromfilters (11) wahlweise mit einem rückspülbaren Automatik-Filtereinsatz (20) oder einem nicht rückspülbaren Einfach-Filtereinsatz (60) bestückt werden kannbar,oder wahlweise mit einem rückspülbaren Automatik-Filtereinsatz (20) oder einem nicht rückspülbaren Einfach-Filtereinsatz (60) bestückt ist, dass das Filtergehäuse (24) des Hauptstromfilters (11) einen Rückspülauslass (23) für Rückspülfluid einer Rückspüleinrichtung aufweist und dass der Einlass (61) des Nebenstromfilters an den Rückspülauslass (23) angeschlossen ist.

2. Filtrationssystem nach Anspruch 1, **dadurch gekennzeichnet, dass** der Automatik-Filtereinsatz (20) wenigstens ein Überströmventil (35) mit einer dem Überströmventil nachgeschalteter Filterstufe (36) aufweist.

3. Filtrationssystem nach Anspruch 2, **dadurch gekennzeichnet, dass** das Überströmventil (35;57) und die diesem nachgeschaltete Filterstufe (36) in den Automatik-Filtereinsatz (20) integriert sind.

4. Filtrationssystem nach einem der Ansprüche 1 bis 4, **dadurch gekennzeichnet, dass** der Hauptstromfilter (11) mit einem im Gehäuse verbauten Turbinenantrieb (29) oder einem am Gehäuse angeflanschten Motorantrieb versehen ist, der mit einer in den auswechselbaren Automatik-Filtereinsatz (20) integrierten Rückspüleinrichtung (50) koppelbar ist oder bei montiertem Automatik-Filtereinsatz gekoppelt ist.

5. Filtrationssystem nach einem der Ansprüche 1 bis 5, **dadurch gekennzeichnet, dass** zwischen Rückspülauslass (23) und Einlass (61) des Nebenstromfilters ein vorzugsweise schaltbares Absperrorgan (9) im Nebenstromkreis angeordnet ist.

6. Filtrationssystem nach einem der Ansprüche 1 bis 6, **dadurch gekennzeichnet, dass** der Einfach-Filtereinsatz (60) mit einem Verschlussorgan (71) für den Rückspülauslass (23) versehen ist.

7. Filtrationssystem nach einem der Ansprüche 1 bis 7, **dadurch gekennzeichnet, dass** das Filtergehäuse (64) des Nebenstromfilters keinen Rückspülauslass aufweist oder einen permanent verschlossenen Rückspülauslass aufweist.

8. Filtrationssystem nach einem der Ansprüche 1 bis 8, **dadurch gekennzeichnet, dass** der Aufnahmeraum (66) des Nebenstromfilters ausgebildet ist, wahlweise den in den Hauptstromfilter einsetzbaren Automatik-Filtereinsatz (20) oder den in den Hauptstromfilter einsetzbaren Einfach-Filtereinsatz (60) aufzunehmen.

9. Filtrationssystem nach einem der Ansprüche 1 bis 9, **dadurch gekennzeichnet, dass** die dem/den Überströmventil/en (35; 57) nachgeschaltete Filterstufe als Schutzsieb (56), insbesondere als zylindrisches Schutzsieb ausgeführt ist, wobei vorzugsweise das Schutzsieb (56) als Bestandteil des Automatik-Filtereinsatzes zwischen Einlass (21) und Auslass (22) des Hauptstromfilters angeordnet ist.

10. Filtrationssystem nach einem der Ansprüche 1 bis 9, **dadurch gekennzeichnet, dass** der Automatik-Filtereinsatz (20) mit Filterkerzen (53) bestückt ist, die vorzugsweise zwischen Siebplatten (54, 55) angeordnet sind, denen jeweils ein Rückspülorgan (58) zugeordnet ist, das mit einer zentralen, den Automatik-Filtereinsatz durchgreifend Hohlwelle (52) gekoppelt ist, deren Hohlraum im Montagezustand des Automatik-Filtereinsatzes im Hauptstromfilter in den Rückspülauslass (23) für Rückspülfluid mündet.

11. Filtrationssystem nach einem der Ansprüche 1 bis 10, **dadurch gekennzeichnet, dass** dem Hauptstromfilter wenigstens ein Vorfilter (4) vorgeschaltet ist.

12. Filtrationssystem nach einem der Ansprüche 1 bis 11, **dadurch gekennzeichnet, dass** die Filterfeinheit des Filtermaterials des Automatik-Filtereinsatzes im Bereich von etwa 5 µm bis 25 µm und die Filterfeinheit des Filtermaterials des Einfach-Filtereinsatz im Bereich von etwa 1 µm bis 20 µm liegt.

13. Verfahren zum Ansteuern eines Filtrationssystem für die Schmierölfiltration insbesondere von Schiffsaggregaten wie Schiffsmotoren, wobei das Schiff mit einem Vorratsbehälter für Schmieröl, mit einem Hauptstromfilter (11) mit Filtergehäuse (24) in einem Hauptstromzweig für Schmieröl zwischen Vorratsbehälter und Schiffsaggregat, und mit einem Nebenstromfilter (12) mit Filtergehäuse (64) in einem in den Vorratsbehälter mündenden Nebenstromkreis für Schmieröl versehen ist und das Filtergehäuse des Hauptstromfilters und das Filtergehäuse des Nebenstromfilters jeweils einen Einlass, einen Auslass und einen strömungstechnisch zwischen diesen angeordneten Aufnahmeraum für einen auswechselbaren Filtereinsatz aufweisen, **dadurch gekennzeichnet, dass** der Aufnahmeraum (26) des Hauptstromfilters (11) während der Anlaufphase der Benutzung des dem Filtrationssystem nachgeschalteten Aggregates mit einem nicht rückspülbaren Einfach-Filtereinsatz (60) bestückt wird und der an einen Rückspülauslass (23) am Filtergehäuse (24) des Hauptstromfilters (11) angeschlossene Nebenstromzweig geschlossen ist, und nach Ablauf der Anlaufphase der Inbetriebnahme der Hauptstromfilter mit einem rückspülbaren Automatik-Filtereinsatz (20) bestückt wird und das Rückspülfluid über den Rückspülauslass dem im Nebenstromzweig angeordneten Nebenstromfilter (12) zugeführt wird, der für die Filtration des Rückspülfluids mit einem nicht rückspülbaren Einfach-Filtereinsatz (60) bestückt wird.

14. Verfahren nach Anspruch 13, **dadurch gekennzeichnet, dass** das Filtrationssystem gemäß einem der Ansprüche 1 bis 12 ausgebildet ist.

15. Verfahren nach Anspruch 13 oder 14, **dadurch gekennzeichnet, dass** in den Nebenstromfilter derjenige Einfach-Filtereinsatz eingesetzt wird, der während der Anlaufphase im Hauptstromfilter eingesetzt wurde, wobei vorzugsweise die Anlaufphase eine Zeitdauer von bis zu 300 Stunden hat.

## Revendications

1. Système de filtration pour filtrer de l'huile de lubrification, particulièrement de l'huile pour des unités maritimes telles que des moteurs maritimes, ayant un contenant de stockage (1) pour huile de lubrification, ayant un filtre d'écoulement principal (11) avec un logement de filtre (24) dans une branche d'écoulement principale pour huile de lubrification entre le contenant de stockage et l'unité maritime, et ayant un filtre d'écoulement de dérivation (12) avec un logement de filtre (64) dans une branche d'écoulement de dérivation pour huile de lubrification, qui s'ouvre dans le contenant de stockage (1), dans lequel le logement de filtre (24) du filtre d'écoulement principal et le logement de filtre (64) du filtre d'écoulement de dérivation ont chacun une entrée (21 ; 61), une sortie (22 ; 62) et un espace d'installation (26 ; 66) pour une pièce rapportée de filtre échangeable, ledit espace étant agencé dans l'écoulement entre l'entrée et la sortie, **caractérisé en ce que** l'espace d'installation (26) du filtre d'écoulement principal (11) peut être équipé d'une pièce rapportée de filtre automatique pouvant être rétro-rincée (20) ou d'une pièce rapportée de filtre simple ne pouvant pas être rétro-rincée (60), ou est équipé d'une pièce rapportée de filtre automatique pouvant être rétro-rincée (20) ou d'une pièce rapportée de filtre simple ne pouvant pas être rétro-rincée (60), **en ce que** le logement de filtre (24) du filtre d'écoulement principal (11) a une sortie de rétro-rinçage (23) pour le fluide de rétro-rinçage d'un dispositif de rétro-rinçage et **en ce que** l'entrée (61) du filtre d'écoulement de dérivation est raccordée à la sortie de rétro-rinçage (23).

2. Système de filtration selon la revendication 1, **caractérisé en ce que** la pièce rapportée de filtre automatique (20) a au moins une soupape de trop-plein (35) avec un étage de filtre (36) agencé en aval de la soupape de trop-plein.

3. Système de filtration selon la revendication 2, **caractérisé en ce que** la soupape de trop-plein (35 ; 57) et l'étage de filtre (36) agencé en aval de cette dernière sont intégrés dans la pièce rapportée de filtre automatique (20).

4. Système de filtration selon une des revendications 1 à 4, **caractérisé en ce que** le filtre d'écoulement principal (11) est pourvu d'un entraînement à turbine (29) installé dans le logement ou d'un entraînement à moteur monté par bride sur le logement, qui est coupable ou, lorsque la pièce rapportée de filtre automatique est installée, est couplé à un dispositif de rétro-rinçage (50) intégré dans la pièce rapportée de filtre automatique échangeable (20).

5. Système de filtration selon une des revendications 1 à 5, **caractérisé en ce qu'**un élément d'arrêt de préférence commutable (9) est agencé dans la branche d'écoulement de dérivation entre la sortie de rétro-rinçage (23) et l'entrée (61) du filtre d'écoulement de dérivation.

6. Système de filtration selon une des revendications 1 à 6, **caractérisé en ce que** la pièce rapportée de filtre simple (60) est pourvue d'un élément de fermeture (71) pour la sortie de rétro-rinçage (23).

7. Système de filtration selon une des revendications 1 à 7, **caractérisé en ce que** le logement de filtre (64) du filtre d'écoulement de dérivation n'a aucune sortie de rétro-rinçage ou a une sortie de rétro-rinçage fermée de façon permanente.

8. Système de filtration selon une des revendications 1 à 8, **caractérisé en ce que** l'espace d'installation (66) du filtre d'écoulement de dérivation est conçu pour recevoir la pièce rapportée de filtre automatique (20) insérable dans le filtre d'écoulement principal ou la pièce rapportée de filtre simple (60) insérable dans le filtre d'écoulement principal.

9. Système de filtration selon une des revendications 1 à 9, **caractérisé en ce que** l'étage de filtre agencé en aval de la/des soupapes de trop-plein (35 ; 57) est incorporé sous forme d'écran de protection (56), en particulier sous forme d'écran de protection cylindrique, dans lequel l'écran de protection (56) est de préférence agencé sous forme de composant de la pièce rapportée de filtre automatique entre l'entrée (21) et la sortie (22) du filtre d'écoulement principal.

10. Système de filtration selon une des revendications 1 à 9, **caractérisé en ce que** la pièce rapportée de filtre automatique (20) est équipée de bougies de filtre (53), qui sont de préférence agencées entre des plaques de tamisage (54, 55), à chacune desquelles est attribué un élément de rétro-rinçage (58), qui est couplé à un arbre creux central (52) passant à travers la pièce rapportée de filtre automatique, dont la cavité s'ouvre dans la sortie de rétro-rinçage (23) pour le fluide de rétro-rinçage dans l'état installé de la pièce rapportée de filtre automatique dans le filtre d'écoulement principal.

11. Système de filtration selon une des revendications 1 à 10, **caractérisé en ce qu'**au moins un préfiltre (4) est agencé en amont du filtre d'écoulement principal.

12. Système de filtration selon une des revendications 1 à 11, **caractérisé en ce que** la finesse de filtre du matériau de filtre de la pièce rapportée de filtre automatique est dans une plage d'environ 5 µm à 25 µm, et la finesse de filtre du matériau de filtre de la pièce rapportée de filtre simple est dans une plage d'environ 1 µm à 20 µm.

13. Procédé pour commander un système de filtration pour filtrer de l'huile de lubrification, particulièrement de l'huile pour des unités motrices maritime telles que des moteurs maritimes, dans lequel le navire est pourvu d'un contenant de stockage pour de l'huile de lubrification, avec un filtre d'écoulement principal (11) avec un logement de filtre (24) dans une branche d'écoulement principale pour huile de lubrification entre le contenant de stockage et l'unité maritime, et avec un filtre d'écoulement de dérivation (12) avec un logement de filtre (64) dans une branche d'écoulement de dérivation pour huile de lubrification, qui s'ouvre dans le contenant de stockage, et le logement de filtre du filtre d'écoulement principal et le logement de filtre du filtre d'écoulement de dérivation ont chacun une entrée, une sortie et un espace d'installation pour une pièce rapportée de filtre échangeable, ledit espace étant agencé dans l'écoulement entre l'entrée et la sortie, **caractérisé en ce que**, durant la phase de démarrage de fonctionnement de l'unité agencée en aval du système de filtration, l'espace d'installation (26) du filtre d'écoulement principal (11) est équipé d'une pièce rapportée de filtre simple ne pouvant pas être rétro-rincée (60) alors que la branche de dérivation raccordée à une sortie de rétro-rinçage (23) sur le logement de filtre (24) du filtre d'écoulement principal (11) est fermée et, après l'expiration de la phase de démarrage de fonctionnement, le filtre d'écoulement principal est équipé d'une pièce rapportée de filtre automatique pouvant être rétro-rincée (20) et le fluide de rétro-rinçage est fourni au filtre d'écoulement de dérivation (12) agencé dans la branche de dérivation par l'intermédiaire de la sortie de rétro-rinçage, ledit filtre d'écoulement de dérivation étant équipé d'une pièce rapportée de filtre simple ne pouvant pas être rétro-rincée (60) afin de filtrer le fluide de rétro-rinçage.

14. Procédé selon la revendication 13, **caractérisé en ce que** le système de filtration est conçu conformément à une des revendications 1 à 12.

15. Procédé selon la revendication 13 ou 14, **caractérisé en ce que** la pièce rapportée de filtre simple utilisée dans le filtre d'écoulement de dérivation est celle utilisée dans le filtre d'écoulement principal durant la phase de démarrage de fonctionnement, dans lequel de préférence la phase de démarrage peut durer jusqu'à 300 heures.
